# EUROPEAN PATENT APPLICATION

(11) **EP 2 159 755 A1**
(43) Date of publication of application: **03.03.2010**
(21) Application number: 08753121.6
(22) Date of filing: 26.05.2008
(51) Int. Cl.: G06T 15/00, A41H 43/00, G06F 17/50, G06T 17/40

(54) **KNITWEAR SIMULATION METHOD, APPARATUS FOR THE METHOD, AND STORAGE MEDIUM**

(30) Priority: 13.06.2007 JP 2007155912
(71) Applicant: Shima Seiki Manufacturing., Ltd., Wakayama-shi, Wakayama 641-0003 (JP)
(72) Inventor: YAMAMOTO, Shinji, Wakayama-shi Wakayama 641-0003 (JP)
(74) Representative: Wagner, Karl H.
(86) International application number: PCT/JP2008/060100
(87) International publication number: WO 2008/152931

(57) **Abstract**

Knitting data is converted into 3D-filament data expressing the positions of stitches 62, 63, the connecting relations between the stitches 62, 63 and the types of the stitches 62, 63, to virtually apply the knitwear on a human body model or a cloth. Layers of the knitwear are formed by setting a view point 65 and a light source 64, converting the stitches 62, 63 in the filament data into a 2D-stitch image with fluff as viewed from the view point 65, overlapping the stitch images, and adding a coordinate of a depth direction and an opacity. Ray tracing is performed in the layers of the knitwear, and average shadows formed by the knitwear are applied to the layers of the human body model or the cloth, and the obtained results are combined into a display image. A high-quality simulation image, which expresses the thread body and the fluff of the knitwear, as well as the shadows of the knitwear on the human body model, can be created in a short time.

## Description

The present invention relates to simulation of a condition where knitwear is applied onto a human body model or the like, and particularly to simulation to express the details of a thread such as fluff, as well as a shadow generated on the human body model by the knitwear.

The inventor has been developing a knitwear simulation method. Simulation of a condition where knitwear is applied onto a human body model or a cloth is carried out three-dimensionally, and the details of a thread such as fluff, and a shadow generated on the human body mode or the like by the knitwear have to be expressed in order to carry out realistic simulation. In a 3D image, the thread can be expressed by a pipe, and the fluff can be expressed by a fine pipe that projects from a thread body. However, such a process lengthens the time required in the simulation. Next, the knitwear makes a shadow on the human body model, and it is difficult to obtain this shadow based on the thread of the knitwear by means of ray tracing.

The related prior arts are described herein. Patent Literature 1 (WO 2003/032203) and Patent Literature 2 (WO 2004/090213) disclose a method for expressing fluff of a thread by two-dimensionally simulating knitwear.

Patent Literature 3 (WO 2005/082185) discloses three-dimensional simulation of knitwear by applying knitwear virtually on a human body model.

An object of the present invention is to realistically simulate knitwear by means of stitches with fluff, and to simulate a shadow generated on the human body model by the knitwear, at high speed.

The present invention is a method for simulating a condition where knitwear is applied onto a human body model by using design data and thread data of the knitwear, and a three-dimensional image of the human body model, the method being characterized in having the steps of:
converting the design data of the knitwear into filament data expressing three-dimensional positions of stitches and a connecting relation between the stitches;
determining a position of a view point and a position of a light source;
using the thread data to convert the stitches configured by fluffy threads in the filament data, into two-dimensional color images and opacity images viewed from the view point;
connecting the two-dimensional color images of the stitches in accordance with the filament data and converting the connected images into a two-dimensional color image and an opacity image of the knitwear viewed from the view point;
darkening a color image of the human body model at a shadow part of the knitwear with a position resolution lower than that of the stitches, in response to light of the light source blocked by the knitwear;
using the opacity image of the knitwear to combine the color image of the human body model and the two-dimensional color image of the knitwear; and
displaying a composite image.

It is preferred that the method be further provided with a step of preparing an image of a fabric worn inside the knitwear on the human body model, wherein the darkening step darkens the color image of the human body model and a color image of the fabric at the shadow part of the knitwear with a position resolution lower than that of the stitches, and the combining step uses the opacity image of the knitwear to combine the color image of the human body model, the color image of the fabric, and the two-dimensional color image of the knitwear.

The image of the fabric is a three-dimensional image when the simulation is performed on a simple piece of cloth, or a two-dimensional image similar to that of the knitwear and a two-dimensional opacity image when the simulation is performed on a knit fabric.

It is preferred that the method be further provided with a step of creating a two-dimensional color image of the human body model and an image expressing a position of the human body model in a depth direction viewed from the view point, and a two-dimensional color image of the fabric and an image expressing a position of the fabric in the depth direction viewed from the view point, on the basis of the position of the view point and the position of the light source, and
an image expressing a position of the knitwear in the depth direction viewed from the view point be created in addition to the two-dimensional color image and opacity image of the knitwear;
a range where the images of the knitwear overlap with the image of the human body model or the fabric be obtained as a shadow part of the knitwear; and
the image combination be performed by obtaining a front-rear relationship of the human body model, the fabric, and the knitwear relative to the view point, on the basis of the three images expressing the positions in the depth direction.

It is preferred that the method be further provided with a step of creating a two-dimensional color image of the human body model and an image expressing a position of the human body model in a depth direction viewed from the view point, and a two-dimensional color image of the fabric and an image expressing a position of the fabric in the depth direction viewed from the view point, on the basis of the position of the view point and the position of the light source, and
an image expressing a position of the knitwear in the depth direction viewed from the view point be created in addition to the two-dimensional color image and opacity image of the knitwear;
a part where the knitwear blocks light emitted from the light source to the human body model or the fabric be obtained as the shadow part on the basis of the three images expressing the positions in the depth direction; and
the image combination be performed by obtaining a front-rear relationship of the human body model, the fabric, and the knitwear relative to the view point, on the basis of the three images expressing the positions in the depth direction.
It is also preferred that the method be further provided with the steps of:
obtaining a shadow part of the knitwear on the human body model or the fabric, on the basis of the positions of the stitches in the filament data; and
creating a two-dimensional color image of the human body model and an image expressing a position of the human body model in a depth direction viewed from the view point, and a two-dimensional color image of the fabric and an image expressing a position of the fabric in the depth direction viewed from the view point, on the basis of the position of the view point and the position of the light source, and
an image expressing a position of the knitwear in the depth direction viewed from the view point be created in addition to the two-dimensional color image and opacity image of the knitwear; and
the image combination be performed by obtaining a front-rear relationship of the human body model, the fabric, and the knitwear relative to the view point, on the basis of the three images expressing the positions in the depth direction.

The present invention is also an apparatus for simulating a condition where knitwear is applied onto a human body model by using design data and thread data of the knitwear, and a three-dimensional image of the human body model, the apparatus being characterized in having:
means for converting the design data of the knitwear into filament data expressing three-dimensional positions of stitches and a connecting relation between the stitches;
means for determining a position of a view point and a position of a light source;
means for using the thread data to convert the stitches configured by fluffy threads in the filament data, into two-dimensional color images and opacity images viewed from the view point;
means for connecting the two-dimensional color images of the stitches in accordance with the filament data and converting the connected images into a two-dimensional color image and an opacity image of the knitwear viewed from the view point;
means for darkening a color image of the human body model at a shadow part of the knitwear with a position resolution lower than that of the stitches, in response to light of the light source blocked by the knitwear; and
means for using the opacity image of the knitwear to combine the color image of the human body model and the two-dimensional color image of the knitwear and then display the obtained image on a monitor.

The present invention is also a computer-readable recording medium, which stores therein a program for simulating a condition where knitwear is applied onto a human body model by using design data and thread data of the knitwear, and a three-dimensional image of the human body model, the storage medium being characterized in storing the program for causing the computer to execute the steps of:
converting the design data of the knitwear into filament data expressing three-dimensional positions of stitches and a connecting relation between the stitches;
determining a position of a view point and a position of a light source;
using the thread data to convert the stitches configured by fluffy threads in the filament data, into two-dimensional color images and opacity images viewed from the view point;
connecting the two-dimensional color images of the stitches in accordance with the filament data and converting the connected images into a two-dimensional color image and an opacity image of the knitwear viewed from the view point;
darkening a color image of the human body model at a shadow part of the knitwear with a position resolution lower than that of the stitches, in response to light of the light source blocked by the knitwear;
using the opacity image of the knitwear to combine the color image of the human body model and the two-dimensional color image of the knitwear; and
displaying a composite image.

In this specification, the description of the simulation method applies directly to the simulation apparatus and the simulation program, and the description of the simulation apparatus applies directly to the simulation method and the simulation program. Examples of the fabric include clothes such as garments and scarves, as well as knitwear. An embodiment simulates a condition where a piece of cloth is applied onto the human body model and the knitwear is applied thereon, but the middle cloth may not be required.

In the present invention, the stitches of the knitwear are expressed not by a three-dimensional model but by a two-dimensional model configured by a thread body and fluff. As a result, the fluff is expressed by not a tube of a three-dimensional model or a polygon on the surface of the tube but a simple two-dimensional image. A shadow made on the human body model by the knitwear is expressed by an average shadow of the knitwear, instead of expressing it by subjecting the shadow of each thread by means of ray tracing. An image of the human body model and an image of the knitwear are combined using the opacity of the knitwear as a parameter. As a result, not only is it possible to process the fluffy knitwear at high speed, but also the shadow of the knitwear can be processed at high speed, and the human body model that can be seen through the

Moreover, the simulation can be carried out similarly even when an image of another fabric is disposed between the knitwear and the human body model. In this case, a shadow of the knitwear may be made on the color image of the human body model and the color image of the fabric, and the color image of the human body model, the color image of the fabric, and the two-dimensional color image of the knitwear may be combined using the opacity image of the knitwear.

Here, the images can be combined simply by processing the images of the knitwear, the human body model and the fabric as two-dimensional color images. The front-rear relationship among the knitwear, the human body model, and the fabric can be processed easily by providing the knitwear, the human body model, and the fabric with an image expressing the position in the depth direction.

In order to obtain a range where the knitwear makes a shadow, the simplest thing is to obtain an overlap of the two-dimensional image such as the color image of the knitwear, and the two-dimensional image such as the color image of the human body model or the fabric, and to obtain the overlapping range as the shadow. This range is a model where a section covered by the knitwear forms a shadow.

The shadow may be realized by obtaining, based on the three images of the knitwear, the human body model and the fabric where the position in the depth direction is expressed, a range where the knitwear, or particularly the contour of the knitwear, blocks the light from the light source. This range is a model where the shadow made by the semi-transparent knitwear is obtained by means of ray tracing with a position resolution courser than that of individual threads.

The shadow of the knitwear may be obtained when the filament data and the three-dimensional data of the human body model and fabric are obtained. Although the shadows of individual threads are not obtained at this stage, the range of the shadow of the knitwear can be obtained.
Fig. 1 is a block diagram of a simulation apparatus according to an embodiment;
Fig. 2 is a block diagram of a simulation method according to the embodiment;
Fig. 3 is a diagram showing a process ranging from the formation of a color image of knitwear to shadowing;
Fig. 4 is a diagram showing an overlap of a knit structure, a piece of cloth, and a human body model; and
Fig. 5 is a diagram showing a simulation image obtained in the embodiment, where a) to d) show an example where knitting data of a knit product is the same, but only thread data is deformed, and where e) to h) show a partial enlargement of the image.

- 2: Simulation apparatus
- 4: Bus
- 6: Stylus
- 8: Mouse
- 10: Keyboard
- 12: Color monitor
- 14: Color printer
- 16: Communication unit
- 18: Disc driver
- 20: Design data editing part
- 22: Data converter
- 24: Filament data generating part
- 26: Scene setting part
- 30: Human body model storage unit
- 32: Cloth data storage unit
- 34: Thread data storage unit
- 35: Application processor
- 36: Hidden surface remover
- 38: Knit rendering part
- 40: Shadow image creating part
- 41: Ray tracing part
- 42: Layer storage unit
- 44: Image combining part
- 50: Image memory
- 60, 61: Knitting course
- 62, 63: Stitches
- 64: Light source
- 65: View point
- 70: Knitwear image layer
- 71: Knitwear mask image layer
- 72: Knitwear shadow image layer
- 73: Cloth image layer
- 74: Cloth mask image layer
- 75: Human body model image layer

The best mode for carrying out the present invention is now described hereinafter, but the present invention is not limited to this mode.

### Embodiment

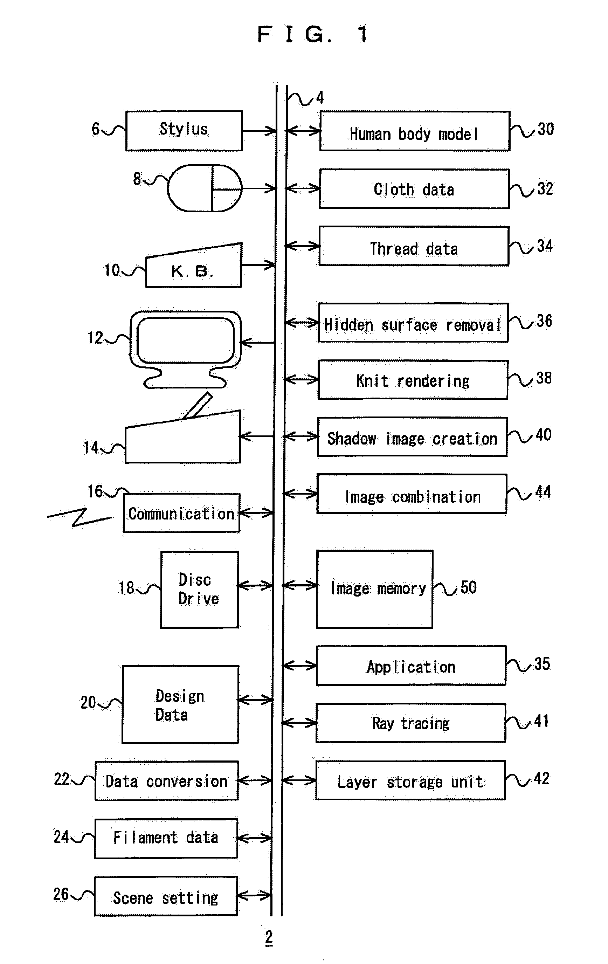

Figs. 1 to 5 show an embodiment. In each diagram, reference numeral 2 represents a simulation apparatus, 4 a bus, 6 a stylus, 8 a mouse, and 10 a keyboard. These components are used as manual input devices. A trackball or joystick may be added as other manual input devices. Reference numeral 12 represents a color monitor, 14 a color printer, 16 a communication unit for communicating with a LAN and the Internet, and 18 a disc driver for reading/writing data from/to an appropriate disk.

Reference numeral 20 represents a design data editing part for causing the stylus 6, mouse 8 or keyboard 10 to generate design data of knitwear. A data converter converts the design data into knitting data for driving a knitting machine, such as a flat knitting machine. A filament data generating part 24 converts the knitting data into filament data, which is three-dimensional data that expresses the positions of stitches, the types of the stitches and a connecting relation between the stitches. The position of each stitch is specified by one point of three-dimensional position representing, for example, the stitch. In this case, the type of the stitch is added as an attribute. In addition, when specifying the position of the stitch by coordinates of a plurality of points of the stitch, the type of the stitch is found from the shape of the stitch. Therefore, it is not necessary to store the type of the stitch. A scene setting part 26 sets a position of a light source and a position of a view point that are obtained in simulation.

A human body model storage unit 30 stores a three-dimensional color image of a human body model therein, and a cloth data storage unit 32 stores therein a three-dimensional color image of a garment made of a cloth put under the knitwear put on the human body model. This garment is simply referred to as "cloth" hereinafter. These three-dimensional color images are composed of polygons and textures in which the human body model and the cloth are opaque, but the cloth may be semi-transparent and opacity of the cloth may be stored. A thread data storage unit 34 stores therein color images and opacity of threads used in the knitwear, wherein the color images of the threads include a thread body part and a fluff part.

As the targets to be simulated, there are three types of targets: the knitwear, the human body model and the cloth, or four types of targets: the knitwear, the human body model, the cloth and the background. Reference numeral 35 represents an application processor, which, according to WO 2005/082185, applies virtual knitwear to the human body model or cloth by using the filament data. Note that the cloth is not taken into consideration in WO 2005/082185, but the application of the knitwear can be simulated in the same manner as WO 2005/082185 by, for example, applying the cloth to the human body model first and taking the applied cloth as a rigid body or a elastic body that is deformed by a collision between the knit and the stitches. Reference numeral 36 is a hidden surface remover, which uses the three-dimensional data to remove, from the simulation targets, the sections in the knitwear, the cloth and the human body model that are hidden from the sight of the view point.

A knit rendering part 38 renders loop images in which the stitches that remain in the filament data of the knitwear without being subjected to hidden surface removal are viewed from the position of the view point, and then connects the loop images to obtain a two-dimensional color image of a section on the knitwear that can be viewed from the view point. This image contains an image of the thread body and an image of the fluff, and the position in a depth direction (Z coordinate) relative to the view point and an image showing the opacity α of the thread body or fluff are added to this image. Image data items are, for example, RGB, Z and α. The knit rendering part 38 connects the individual loop images in accordance with the filament data to create the two-dimensional color image (layers of the knitwear) and to further create a depth image (Z image) and the image of the opacity α (mask image).

A shadow image creating part 40 creates an image of an average shadow generated on the human body model or cloth by the knitwear. A ray tracing part 41 performs ray tracing on the images of the human body model, the cloth and the knit. However, ray tracing is not performed to show how the knitwear blocks the light emitted to the human body model or the cloth. Furthermore, the cloth is opaque and ray tracing to show whether the cloth blocks the light emitted to the human body model is nor performed. Note that the cloth may be semi-transparent and the shadow of the cloth generated on the human body model may be obtained. In this case, the shadow image creating part 40 may obtain the shadow of the cloth generated on the human body model, in the same manner as obtaining the shadow of the knitwear.

The color image of the human body model or the color image of the cloth data are converted into two-dimensional color images viewed from the view point. These two-dimensional color images are called "layers." Next, from the three-dimensional data, an image showing the position in the depth direction relative to the view point is added, and ray tracing and shadowing are carried out. In this manner, the color image of the two-dimensional human body model and the color image of the cloth data are obtained, which are then stored in a layer storage unit 42. Similarly, the image showing the position in the depth direction of the human body model or cloth data is stored in the layer storage unit 42. The layers to be created are the two-dimensional color images of the knitwear, the cloth and the human body model, the image of the opacity of the knitwear (mask image), the image of the shadow of the knitwear, and the mask image of the cloth.

An image combining part 44 combines the four images of the knitwear, the human body model, the cloth and the background. When combining the images, because the data on the depth direction position Z relative to the view point is used to realize the cloth or human body model that can be seen through the image of the semi-transparent knit, the image of the opacity α of the knitwear is used. The obtained image is stored in an image memory 50, is then displayed on the color monitor 12, and is output from the color printer 14 or the communication unit 16.

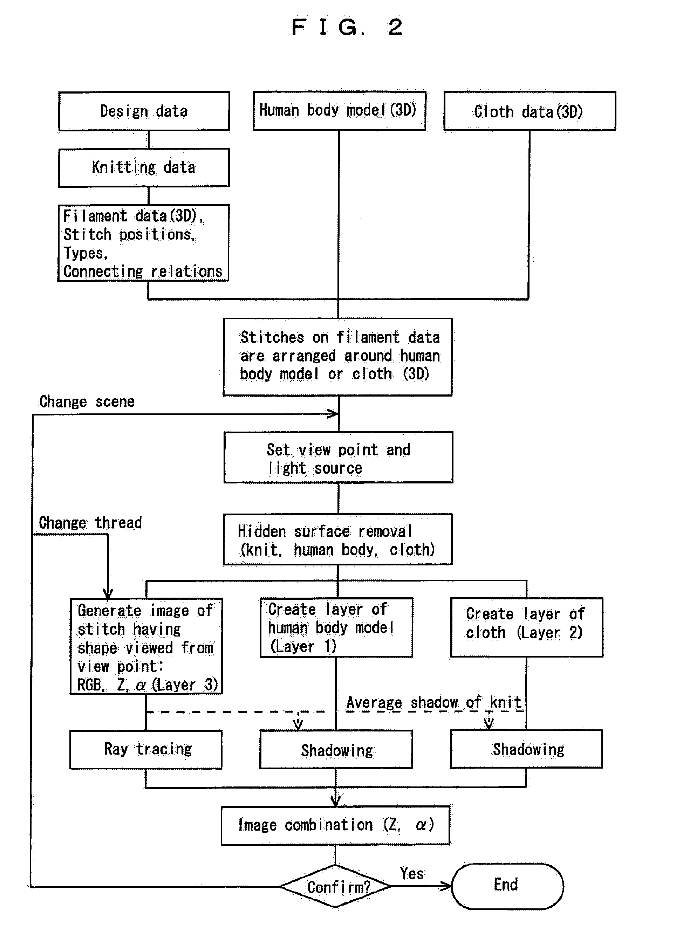

Fig. 2 shows a flow of the data in the embodiment. The design data is converted into the knitting data, which is then converted into the filament data. The filament data expresses stitch positions by specifying one or plural points of three-dimensional positions for each stitch, and obtains the types of the stitches and the connecting relations therebetween as the attributes. The human body model and the cloth data are both in the form of three-dimensional color images. The stitches on the filament data are arranged around the human body model or the cloth. Next, the positions of the view point and the light source are set, a section on the knitwear that is hidden by the human body model or the cloth are removed, and a section on the cloth that is hidden by the human body model is also removed.

The three-dimensional color image of the human body model is converted into a two-dimensional color image viewed from the view point. Similarly, the color image of the cloth is converted into a two-dimensional color image of the cloth viewed from the view point, and the filament data of the knitwear is converted into a two-dimensional color image viewed from the view point. Target stitches are the stitches that are not subjected to hidden surface removal. The color image of the thread body and fluff is attached along the filament of each stitch, and at the same time an image of the opacity of the thread body and fluff is created. The color image and the opacity of the thread body and fluff are stored in the thread data storage unit 34. For example, a stitch image in which the stitches are viewed from the front is created once, and this image is rotated so that it is viewed from the view point. When the rotation of the stitches generates a section where the threads are overlapped in the depth direction, the images are combined based on the opacity, and the opacity is increased at the overlapping section. Because the three-dimensional position of each stitch is described in the filament data, the coordinate Z of the depth direction of the stitch relative to the view point is generated using the three-dimensional position of the stitch. Next, ray tracing is performed within the range of the knitwear so that the threads far from the light source become dark in the section where the threads overlap. Similarly, ray tracing is performed on the light emitted from the light source in the human body model, without taking the cloth or the knitwear into consideration. Furthermore, ray tracing is performed on the light emitted from the light source in the cloth by taking into consideration not the knitwear but the human body model.

The shadow generated by the knitwear is added to the color image of the human body model and the color image of the cloth. This shadow, which is an average shadow of the knitwear, does not express shadows generated by individual threads of the knitwear. After the shadow of the knitwear is added, the images of the layers of the knitwear, human body model and cloth are combined. Thus obtained composite image is displayed on the color monitor. When changing the scene, the position of the view point and the position of the light source are reset, in response to which the two-dimensional color image of the knitwear and the layer images of the human body model and the cloth are reset. Moreover, when changing threads, the two-dimensional color image of the knitwear of a layer is changed.

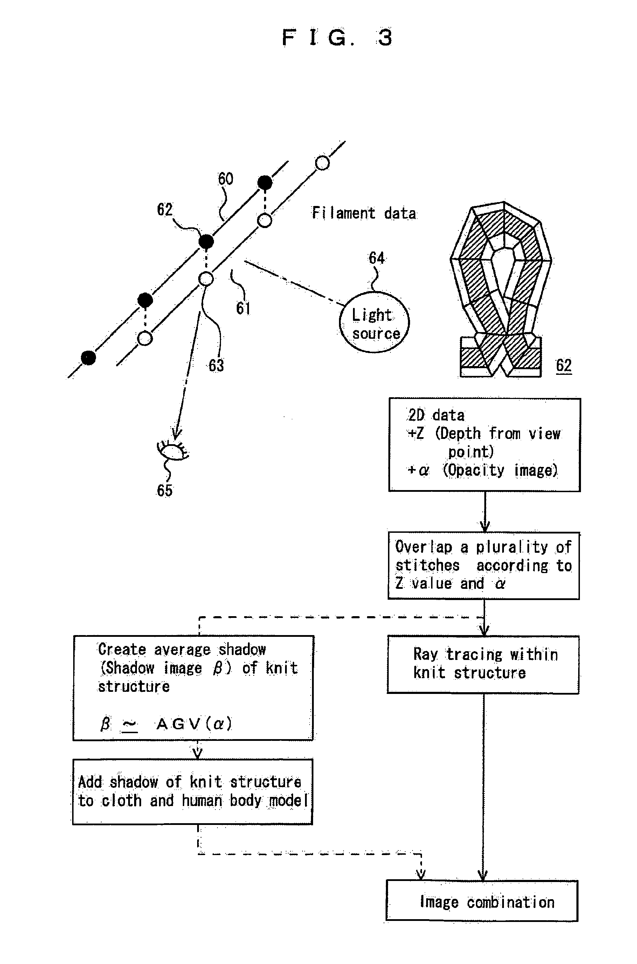

Fig. 3 shows a process ranging from the formation of a color image of the knitwear to shadowing. Reference numerals 60, 61 represent knitting courses where stitches 62, 63 are arrayed. The dashed lines in Fig. 3 show the connecting relations of the stitches between the knitting courses. Reference numeral 64 represents the light source, and 65 the view point. An image of the stitch 62 viewed from the view point 65 is composed of a hatched thread body section and its peripheral fluff section. These sections are obtained by rotating an image in which the stitch 62 is viewed from the front, or by attaching an image of the thread body or fluff to the filament viewed from the view point. Opacity is applied to the thread body or fluff when the thread data is obtained, and when a thread overlaps with another thread due to the rotation, the opacity is increased at this overlapping section. In this manner, a two-dimensional color image of one stitch viewed from the view point 65, an image of the depth direction, and an image of the opacity are obtained. A plurality of stitches of the filament data are overlapped, and the stitches are overlapped based on the value of Z and the opacity α in the section where the stitches overlap with each other. As a result, a two-dimensional color image in which the knitwear is viewed from the view point 65 can be obtained. Next, ray tracing is carried out within the knit structure.

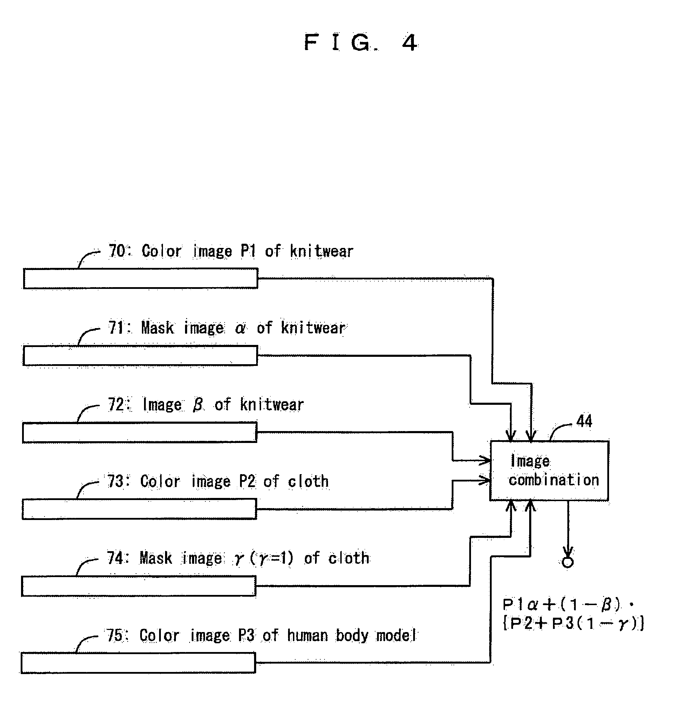

Fig. 4 shows a model for performing shadowing. Reference numeral 70 represents a layer of the color image of the knitwear, and the value of this image is expressed by P1. Reference numeral 71 represents a mask image layer of the knitwear, and the value of this image is expressed by α. Reference numeral 72 represents an image layer of a shadow of the knitwear, and the value of this image is expressed by β. Reference numeral 73 is a color image layer of the cloth, and the value of this image is expressed by P2. Reference numeral 74 is a mask image layer of the cloth, and the value of this image is expressed by γ (γ = 0 or 1). Reference numeral 75 is an image layer of the human body model, and the value of this image is expressed by P3. The positional relationship of these layers to the view point is processed by the hidden surface remover 36. The knitwear forms the uppermost layer, the cloth forms the middle layer, and the human body model forms the lowermost layer.

The value β of the shadow image is obtained by blurring, i.e., averaging, the two dimensions x, y of the two dimensional image in the both directions of x, y. For example, when the blur is 0, the shadow image is of the shape as the mask image, and increasing the blur makes the shadow image wider than the mask image. The degree of the blur is defined by specifying the width to be blurred, based on, for example, each of the dimensions of x, y. The shadow image is slid from the mask image in each of the directions of x, y, and values Sx, Sy by which the shadow image is slid can be specified by a user. For example, when Sx = 5 and Sy = 3, the shadow image is slid by 5 dots in the x direction and 3 dots in the y direction with respect to the mask image. When the shadow image is black-and-white, and β is one-dimensional and the shadow image is in color, β becomes three-dimensional data having each of the components of the RGB. A color shadow has a color value obtained by blurring a color value of the knitwear. Furthermore, the darkness of the shadow can be specified, and value α of the mask can be smoothed as it is and slid. Moreover, the value α of the mask can be weakened to, for example, approximately 10 to 50%, smoothed and then slid. Because the cloth is opaque, the value γ of the mask is 1 (with the cloth) or 0 (without the cloth).

Therefore, the composite image P is obtained as P = P1α + (1 - β) (P2 + P3 (1 - y)). In this way, the composite image can be obtained easily by using the image combining part 44. Then, the darkness/lightness or blurriness of the shadow is specified to realize the shadow realistically, or the direction of the light source can be expressed by sliding the shadow.

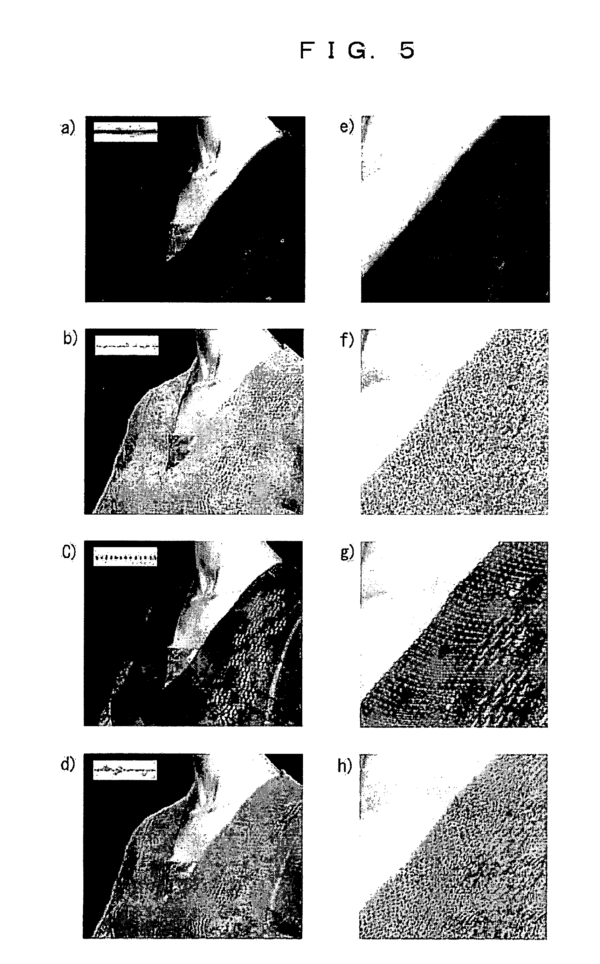

Figs. 5a) to 5h) show a simulation image obtained in the embodiment. The image of a thread used is shown in the upper left side of a) to d), wherein the same human body model, the cloth, and the design data of the knitwear are used. An enlargement of the simulation image is shown in e) to h), wherein the brightness of the human body model seen through the knitwear is changed by the thickness or the like of the thread. Further, a condition where the fluffy knitwear is applied can be simulated.

The following effects can be obtained in the embodiment.
(1) Instead of creating a three-dimensional color image of the knitwear, a two-dimensional color image viewed from the view point is created. Then, by expressing the thread body and the fluff in the form of not the pipes but a two-dimensional color image, an image of the knitwear can be created easily.
(2) Average shadowing is performed on the human body model or the cloth by the knitwear without taking the effects of individual threads into consideration. Therefore, shadowing can be carried out easily.
(3) In the stage of image composition, the layer of the knitwear, the layer of the human body model, and the layer of the cloth may be combined, whereby the combination can be performed easily.
(4) Even when the design of the knitwear or a yarn used is changed, it is not necessary to change the layers of the human body model and the cloth. Therefore, a simulation image that shows a condition where the knitwear is applied can be created at high speed, and the simulation image has a quality that can be utilized as a virtual sample of the knitwear.

The simulation apparatus 2 of the present invention is realized by installing the simulation program on a computer, and the computer is caused to read the simulation program through a storage medium such as a CD-ROM or through a carrier wave. Fig. 2 corresponds to a block diagram of the simulation program, which execute each of the processes shown in Fig. 2.

## Claims

1. A knitwear simulation method for simulating a condition where knitwear is applied onto a human body model by using design data and thread data of the knitwear, and a three-dimensional image of the human body model, the method being **characterized in** comprising the steps of:
converting the design data of the knitwear into filament data expressing three-dimensional positions of stitches 62, 63 and a connecting relation between the stitches 62, 63;
determining a position of a view point 65 and a position of a light source 64;
using the thread data to convert the stitches 62, 63 configured by fluffy threads in the filament data, into two-dimensional color images and opacity images viewed from the view point 65;
connecting the two-dimensional color images of the stitches 62, 63 in accordance with the filament data and converting the connected images into a two-dimensional color image and an opacity image of the knitwear viewed from the view point 65;
darkening a color image of the human body model at a shadow part of the knitwear with a position resolution lower than that of the stitches 62, 63, in response to light of the light source 64 blocked by the knitwear;
using the opacity image of the knitwear to combine the color image of the human body model and the two-dimensional color image of the knitwear; and
displaying a composite image.

2. The knitwear simulation method according to claim 1, **characterized in** further comprising a step of preparing an image of a fabric worn inside the knitwear on the human body model,
and **characterized in that** the darkening step darkens the color image of the human body model and a color image of the fabric at the shadow part of the knitwear with a position resolution lower than that of the stitches 62, 63, and
the combining step uses the opacity image of the knitwear to combine the color image of the human body model, the color image of the fabric, and the two-dimensional color image of the knitwear.

3. The knitwear simulation method according to claim 2, **characterized in** further comprising a step of creating a two-dimensional color image of the human body model and an image expressing a position of the human body model in a depth direction viewed from the view point 65, and a two-dimensional color image of the fabric and an image expressing a position of the fabric in the depth direction viewed from the view point 65, on the basis of the position of the view point 65 and the position of the light source 64,
and **characterized in that** an image expressing a position of the knitwear in the depth direction viewed from the view point 65 is created in addition to the two-dimensional color image and opacity image of the knitwear;
a range where the images of the knitwear overlap with the image of the human body model or the fabric is obtained as a shadow part of the knitwear; and
the image combination is performed by obtaining a front-rear relationship of the human body model, the fabric, and the knitwear relative to the view point 65, on the basis of the three images expressing the positions in the depth direction.

4. The knitwear simulation method according to claim 2, **characterized in** further comprising a steps of creating a two-dimensional color image of the human body model and an image expressing a position of the human body model in a depth direction viewed from the view point 65, and a two-dimensional color image of the fabric and an image expressing a position of the fabric in the depth direction viewed from the view point 65, on the basis of the position of the view point 65 and the position of the light source 64,
and **characterized in that** an image expressing a position of the knitwear in the depth direction viewed from the view point 65 is created in addition to the two-dimensional color image and opacity image of the knitwear;
a part where the knitwear blocks light emitted from the light source 64 to the human body model or the fabric is obtained as the shadow part on the basis of the three images expressing the positions in the depth direction; and
the image combination is performed by obtaining a front-rear relationship of the human body model, the fabric, and the knitwear relative to the view point 65, on the basis of the three images expressing the positions in the depth direction.

5. The knitwear simulation method according to claim 2, **characterized in** further comprising the steps of:
obtaining a shadow part of the knitwear on the human body model or the fabric, on the basis of the positions of the stitches 62, 63 in the filament data; and
creating a two-dimensional color image of the human body model and an image expressing a position of the human body model in a depth direction viewed from the view point 65, and a two-dimensional color image of the fabric and an image expressing a position of the fabric in the depth direction viewed from the view point 65, on the basis of the position of the view point 65 and the position of the light source 64,
and **characterized in that** an image expressing a position of the knitwear in the depth direction viewed from the view point 65 is created in addition to the two-dimensional color image and opacity image of the knitwear; and
the image combination is performed by obtaining a front-rear relationship of the human body model, the fabric, and the knitwear relative to the view point 65, on the basis of the three images expressing the positions in the depth direction.

6. A knitwear simulation apparatus 2 for simulating a condition where knitwear is applied onto a human body model by using design data and thread data of the knitwear, and a three-dimensional image of the human body model, the apparatus 2 being **characterized in** comprising:
means for converting the design data of the knitwear into filament data expressing three-dimensional positions of stitches 62, 63 and a connecting relation between the stitches 62, 63;
means for determining a position of a view point 65 and a position of a light source 64;
means for using the thread data to convert the stitches 62, 63 configured by fluffy threads in the filament data, into two-dimensional color images and opacity images viewed from the view point 65;
means for connecting the two-dimensional color images of the stitches 62, 63 in accordance with the filament data and converting the connected images into a two-dimensional color image and an opacity image of the knitwear viewed from the view point 65;
means for darkening a color image of the human body model at a shadow part of the knitwear with a position resolution lower than that of the stitches 62, 63, in response to light of the light source 64 blocked by the knitwear; and
means for using the opacity image of the knitwear to combine the color image of the human body model and the two-dimensional color image of the knitwear and then display the obtained image on a monitor 12.

7. A computer-readable recording medium, storing therein a program for simulating a condition where knitwear is applied onto a human body model by using design data and thread data of the knitwear, and a three-dimensional image of the human body model, the storage medium being **characterized in** storing the program for causing the computer to execute the steps of:
converting the design data of the knitwear into filament data expressing three-dimensional positions of stitches 62, 63 and a connecting relation between the stitches 62, 63;
determining a position of a view point 65 and a position of a light source 64;
using the thread data to convert the stitches 62, 63 configured by fluffy threads in the filament data, into two-dimensional color images and opacity images viewed from the view point 65;
connecting the two-dimensional color images of the stitches 62, 63 in accordance with the filament data and converting the connected images into a two-dimensional color image and an opacity image of the knitwear viewed from the view point 65;
darkening a color image of the human body model at a shadow part of the knitwear with a position resolution lower than that of the stitches 62, 63, in response to light of the light source 64 blocked by the knitwear;
using the opacity image of the knitwear to combine the color image of the human body model and the two-dimensional color image of the knitwear; and
displaying a composite image.
